# EUROPEAN PATENT APPLICATION

(11) **EP 3 144 202 A1**
(43) Date of publication of application: **22.03.2017**
(21) Application number: 15185621.8
(22) Date of filing: 17.09.2015
(51) Int. Cl.: B62B 3/00, A47B 31/02

(54) **MOBILE DEVICE FOR DISTRIBUTING GOODS AND ASSEMBLY COMPRISING IT**

(71) Applicant: Scheurwater, Maarten Cornelis, 4043 GC Opheusden (NL)
(72) Inventor: Scheurwater, Maarten Cornelis, 4043 GC Opheusden (NL)
(74) Representative: De Vries & Metman

(57) **Abstract**

A mobile device for distributing goods, comprises a thermally insulating housing defining an inner cavity which by dividing walls is divided in a number of inner spaces intended for receiving said goods and which are thermally insulated from each other and which each are provided with a door intended for offering access to said inner space, and at least one passive cooling member which in a removable manner is positionable in at least one of said inner spaces.

## Description

The invention firstly relates to a mobile device intended for distributing goods.

In recent years the nature of shopping is rapidly changing. There is an increasing shift towards online shopping and this shift has consequences for the logistics involved in the transfer of purchased articles to the customers. While a customer after a purchase in a shop may directly take the purchased articles(s) with him/her, a purchased article after on online purchase in a large majority of cases will have to be delivered at the residence of the customer, or in a smaller amount of cases will have to be transported to a pick-up location where the customer can collect the purchased article(s). In both cases the purchased articles have to be transported from the shop (or warehouse) towards another location. Especially when the purchased articles relate to perishable goods (such as predominantly foodstuffs, but also other goods such as for example medicines or cut flowers), the logistics involved may encompass complicated measures for assuring that the quality of the transported/distributed goods is maintained as much as possible. It is known, for example, to use different containers (as mobile devices for distributing goods), such as shopping crates, cooling and freezing boxes and thermo boxes. Depending on the temperature regime required for the specific categories of goods (for example room temperature for non-food and cosmetics, 2°C for cool fresh goods and -18°C for frozen products) a choice of container is made and, if required, a cooling substance, such as crushed ice, is added to the goods. The containers then are distributed by vehicles (either directly to a customer or to a pick-up location).

Such a logistic process is far from optimal. Without the intention to be complete, the following drawbacks may be mentioned. If the purchase involves goods of different categories, also different containers are required. This increases the cost, transport volume and environmental impact. These drawbacks are even increased in relation to a conditioned transport and distribution of cooled and frozen products. The entire process is labour intensive and generally allows only a one-directional process (meaning, for example, that a return of packagings, such as empty bottles, is not possible). Specifically when the logistic process involves the distribution through a store functioning as a pick-up location for the customer, the opening times of the store pose a restriction for the customer while problems may arise with respect to available storage space in the store. Unmanned pick-up facilities will be subject to similar drawbacks, and specifically the cost for conditioning cooled and frozen products during prolonged periods (between the delivery of the products at said facility and the pick-up by the customer) will be considerable.

It is an object of the present invention to provide an improved mobile device for distributing goods.

Thus, in accordance with the present invention a mobile device for distributing goods is provided, comprising a thermally insulating housing defining an inner cavity which by dividing walls is divided in a number of inner spaces intended for receiving said goods and which are thermally insulated from each other and which each are provided with a door intended for offering access to said inner space, and at least one passive cooling member which in a removable manner is positionable in at least one of said inner spaces.

By using this mobile device, different goods may be distributed simultaneously. For goods which may be distributed at room temperature just an inner space without a cooling member may be used. For goods which have to be cooled or even have to be kept in a frozen state, an appropriate cooling member (or even a number of cooling members) may be applied to the respective inner space. Because these cooling members are passive, basically no power supply is required. The door of an inner space is effective in keeping the inner space in the required temperature range, in combination with the insulation provided by the housing (wherein this insulation may be achieved in many known manners, for example using panels with a core of insulating material or vacuum panels) and between adjacent inner spaces. The mobile device may be used to distribute the goods over the customers, to deliver the goods to a pick-up location or to function itself as a manned or unmanned pick-up facility (as will be elucidated further below). Other possibilities of using such a mobile device will appear from a description of embodiments thereof. Using such a mobile device allows to simplify the logistics while distributing purchased goods, to reduce the cost involved and to enhance the environmental performance.

It should be noted that the indication "distribution" should be considered to involve all steps between the moment of loading the goods into the mobile device and the moment of delivery to the customers, thus also the storage of goods (for example when the mobile device is not being handled).

The cooling member in a removable manner is positionable in at least one of said inner spaces; this means that other inner spaces may remain free of such a cooling member. Thus, if a specific inner space will be used for receiving goods that do not need any cooling, the cooling member will be absent there. In other inner spaces a cooling member may be provided.

The housing comprises a number of separate doors each independently offering access to a specific inner space. This has a number of advantages. At one hand this allows to access a specific inner space while minimising the effect on the temperature regime at another inner space. At the other hand this allows to provide access to only one or a number of specific inner spaces (for example in cases where the mobile device houses goods for a number of different customers).

In one embodiment at least one inner space is provided with a receptacle for removably receiving a cooling member. Such a receptacle provides a well-defined location where the cooling member will be positioned, such that it may be assured that the cooling member indeed is positioned at a most effective position.

In one embodiment, then, the receptacle is defined in or on a dividing wall adjacent said inner space. Preferably, the receptacle is defined in or on a dividing wall positioned above a respective inner space. Of course, for a top-most inner space such a dividing wall above the inner space also may be defined by the housing as such.

It is conceivable that all inner spaces are provided with a receptacle for removably receiving a cooling member. Depending on the goods a cooling member may be provided in a specific inner space, or not.

When each passive cooling member defines a eutectic cooling member, an effective and prolonged cooling performance is achievable. Tests carried out have shown that using such eutectic cooling members may result in maintaining the required temperature regimes (for example for keeping frozen products in a frozen state) during at least 48 hours. The eutectic cooling members may come in the form of cassettes which can be brought down to the required low temperature by using an appropriate device, for example an electric shock-freezer. The cassettes are reusable and do not lead to the generation of moist as is the case when crushed ice is used.

For further improving the performance of the mobile device it is conceivable that each door is lockable. This allows to control the manner in which different customers gain access to the different inner spaces with goods.

In a further embodiment the mobile device comprises control means connected to input means. For example the mobile device may comprises control means for transferring a door between a locked state and an unlocked state, which control means are connected to the input means for receiving customer identifying data. Such customer identifying data for example may comprise a code which the customer has received after his/her purchase. The input means may be an input device on the mobile device (for example a keyboard, a card reader or alike), but also may comprise a receiver for receiving data sent by an external transmitter.

The input means also may be used to enter information about the goods which are received in the inner spaces.

The mobile device may have many other features for improving its performance, such as for example temperature sensor means and climate control means (for achieving an optimised temperature regime within the inner spaces); GPS means (enabling a tracking of the mobile device); wheels, such as caster wheels (for improving the handling of the mobile device).

Although the mobile device uses passive cooling members and as such does not require a connection to the power grid, it preferably comprises an autonomous power supply, such as a battery or alike, which may be used to feed any auxiliary provisions in the mobile device, such as electronic components (for example the above mentioned control means, input means, sensor and climate control means or GPS means).

The mobile device may comprise trays intended to be positioned in the inner spaces and provided with dedicated means for supporting specific goods. As non-limiting examples may be mentioned: trays for (cooled) agricultural goods intended for markets and specialised (grocery) shops; trays for in a leak-free manner transporting meat and fish; trays for floral goods (such as cut flowers), for example with a suspension rack and a reservoir containing crystal ice gel beads allowing a transport without water buckets; trays for fresh meals and frozen meals (for example for catering and care facilities).

In a second aspect the invention relates to an assembly of a mobile device according to the present invention and a control station, wherein the mobile device and control station are provided with communication means intended for establishing a data communication there between and wherein the control station is provided with input means for receiving information, a display intended for displaying information and control means for processing data originating from the input means and/or from the data communication.

For example the control station is one of a control panel intended to be located at a pick-up facility or a computer intended to be used by a customer at any desired location. When such a control station has a fixed location, for example at a pick-up facility to which the mobile device is transferred, a customer may enter information through the input means (for example a keyboard or a card reader), which information after processing by the control means is sent (by a connection that may be partly wireless or fixed, for example web-based) to the mobile device through the communication means (for example a transmitter and receiver). This information may be a customer identification based upon which the mobile device allows access to one or more inner spaces by opening respective doors. The customer identification may be a code which the customer receives after a purchase.

The control station may be used for a broad array of functions. For example, apart from the above customer identification for allowing access to specific inner spaces (and thus goods supported thereby), the control station also may be used to identify returned goods (such as empty bottles) in which case the input means may comprise a scanner or alike. The control station then may send a message to the mobile device for opening a door for placing the returned good in an inner space. Also, the control station then may take care of returning any deposits (for example on empty bottles) on a customer account. The control station also may be used to carry out a check of the age of a customer (for example based upon identity papers or alike), which may be mandatory when the goods are age-restricted goods (such as liquor).

Another function of the control station may be to receive information from a mobile device and displaying this information on its display. This, for example, may be information about the contents of the mobile device such that a specific customer may check on beforehand whether the purchased goods have arrived in said mobile device.

The control station (which also may be a (personal) computer (or laptop/tablet/smartphone or similar device) of the customer and thus may be used at any appropriate location (where the computer directly or indirectly may gain access to mobile device) may be used directly by a customer and as such may be considered an unmanned control station, but it also is possible that an operator operates the control station and then the control station may be considered a manned control station.

Hereinafter the invention will be elucidated while referring to the drawings, in which:
Figure 1 schematically and in a perspective view shows a mobile device with closed doors;
Figure 2 schematically and in a perspective view shows a mobile device with doors removed, and
Figure 3 illustrates an assembly of mobile device and control station.

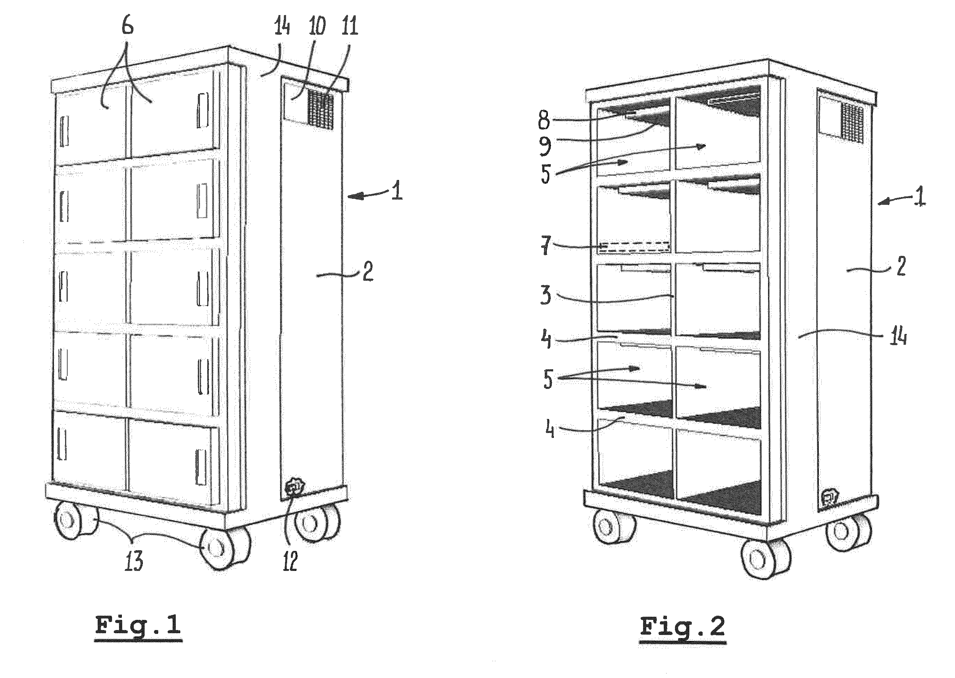

In figures 1 and 2 an embodiment of a mobile device 1 for distributing goods (such as, for example, foodstuffs) is illustrated. It basically comprises an insulating housing 2 defining an inner cavity which by dividing walls (in the illustrated embodiment one single vertical dividing wall 3 and a number of horizontal dividing walls 4) is divided in a number (here ten) of inner spaces 5 intended for receiving said goods. The inner spaces 5 are thermally insulated from each other and each are provided with a door 6. The doors 6 may be connected to the housing 2 (for example through hinges). Each door 5 independently offers access to a specific inner space 5.

It is noted that in figure 2 the doors 6 are not represented. This, however, does not mean that the doors 6 always are detachable from the housing 2 (in most cases they will not be). This manner of representation mainly is chosen for better showing the housing 2 with inner spaces 5 provided therein.

One or more trays 7 (one of which has been represented in dotted lines in figure 2 as being positioned in one of the inner spaces 5) in a removable manner are positionable in selected ones of the inner spaces 5 and are intended for carrying said goods. The tray 7 may be provided with (or may be designed as) dedicated means for supporting specific goods.

The mobile device 1 further comprises passive cooling members 8 (one of which has been represented in figure 2 as being positioned in the top left inner space 5) which in a removable manner are positionable in selected ones of the inner spaces 5. In the illustrated embodiment the cooling member 8 in a removable manner is positionable in a receptacle 9 which may be defined in or on a dividing wall adjacent said inner space, and in the illustrated embodiment is defined in or on a horizontal dividing wall 4 positioned above a respective inner space 5 (obviously, then, for the uppermost inner spaces 5 said receptacles 9 will be defined in parts of the housing 2 itself).

The passive cooling member 8 may define a eutectic cooling member.

It is noted that some inner spaces 5 may be provided with a cooling member 8 and others may not. This will depend on the type of goods received in a specific inner space 5 (goods not requiring any cooling; goods to be cooled; frozen goods to be kept in a frozen condition). Also the type of cooling member 8 may vary (cooling members 8 offering different temperatures).

Preferably each door 6 is lockable. For example, when the mobile device 1 comprises control means 10 connected to input means 11 (both schematically indicated in the figures), a customer may enter a code for opening a specific door 6. The control means 10 also may provide or may be combined with other features such as a temperature sensor means and climate control means, and GPS means.

In figures 1 and 2 the housing 2 has partly been broken away for showing an autonomous power supply, such as a battery 12 or alike which may be used to power the control means 10 and other parts of the mobile device 1, for example drive members for operating locks of the doors 6.

The mobile device 1 as illustrated comprises wheels 13, such as caster wheels, and as a result can be moved easily. Also an integrated protective cover 14 may be provided around (part of) the housing 2. It is conceivable that such a cover 14 may be removed from the remainder of the mobile device.

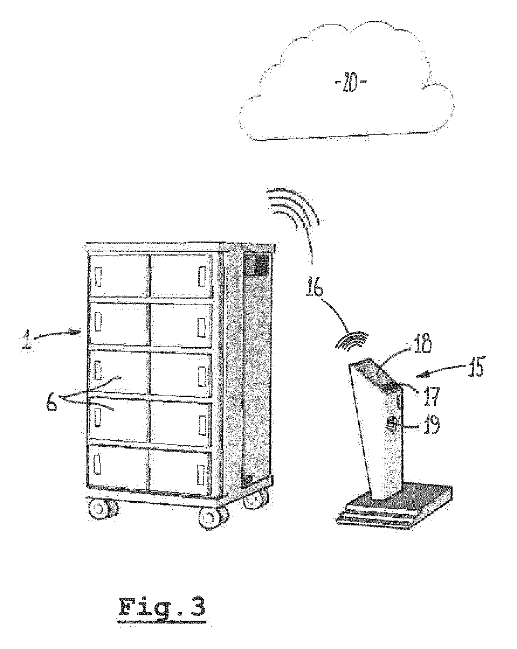

Referring to figure 3 an assembly of a mobile device 1 according to the present invention and a control station 15 located at a pick-up facility is illustrated. The mobile device 1 and control station 15 are provided with communication means (for example transmitters and receivers not illustrated) intended for establishing a wireless data communication 16 there between (but a fixed connection is conceivable too). The control station 15 is provided with input means 17 (for example a keyboard or card reader) for receiving information, a display 18 intended for displaying information and control means (schematically indicated at 19) for processing data originating from the input means 17 and/or from the data communication 16. The control station 15 among others may be used to gain access to the mobile device 1 (controlling unlocking some of the doors 6 upon authentication of consumer identifying data which are received through the input means 17) and to display information on the display 18 (for example about the contents of the inner spaces 5 within the mobile device 1).

A personal computer (or similar device) may also play the role of control station and allows a customer to connect (directly or indirectly) to the mobile device, even from his/her house or any other location where a data communication with the mobile device can be established (internet access).

The connection between the control station 15 and the mobile device 1 may also use the cloud 20 (e.g. for storing and processing data).

The invention is not limited to the embodiments described before which may be varied widely within the scope of the invention as defined by the appending claims.

## Claims

1. Mobile device for distributing goods, comprising a thermally insulating housing defining an inner cavity which by dividing walls is divided in a number of inner spaces intended for receiving said goods and which are thermally insulated from each other and which each are provided with a door intended for offering access to said inner space, and at least one passive cooling member which in a removable manner is positionable in at least one of said inner spaces.

2. Mobile device according to claim 1, wherein at least one inner space is provided with a receptacle for removably receiving a cooling member.

3. Mobile device according to claim 2, wherein the receptacle is defined in or on a dividing wall adjacent said inner space.

4. Mobile device according to claim 3, wherein the receptacle is defined in or on a dividing wall positioned above a respective inner space.

5. Mobile device according to any of the claims 2-4, wherein all inner spaces are provided with a receptacle for removably receiving a cooling member.

6. Mobile device according to any of the previous claims, wherein each passive cooling member defines a eutectic cooling member.

7. Mobile device according to any of the previous claims, wherein each door is lockable.

8. Mobile device according to any of the previous claims, further comprising control means connected to input means.

9. Mobile device according to any of the previous claims, comprising at least one of temperature sensor means and climate control means.

10. Mobile device according to any of the previous claims, comprising GPS means.

11. Mobile device according to any of the previous claims, comprising wheels, such as caster wheels.

12. Mobile device according to any of the previous claims, comprising an autonomous power supply, such as a battery or alike.

13. Mobile device according to any of the previous claims, comprising trays intended to be positioned in the inner spaces and provided with dedicated means for supporting specific goods.

14. Assembly of a mobile device according to any of the previous claims and a control station, wherein the mobile device and control station are provided with communication means intended for establishing a data communication there between and wherein the control station is provided with input means for receiving information, a display intended for displaying information and control means for processing data originating from the input means and/or from the data communication.

15. Assembly according to claim 14, wherein the control station is one of a control panel intended to be located at a pick-up facility or a computer intended to be used by a customer at any desired location.
